# FASCICULE DE BREVET EUROPEEN

(11) **EP 0 437 149 B1**
(45) Date de publication et mention de la délivrance du brevet: **01.06.1994**
(21) Numéro de dépôt: 90403800.7
(22) Date de dépôt: 28.12.1990
(51) Int. Cl.: B29C 65/34

(54) **Procédé d'alimentation en énergie électrique d'une résistance, circuit électrique prévu à cet effet et utilisations de ce circuit**
Stromversorgungsverfahren für einen Widerstand, Schaltung dieser Wirkung zum Vorbringen und die Schaltungsanwendungen
Procedure for supplying electrical power to a resistance, the electrical circuit to produce this effect and the uses of this circuit

(30) Priorité: 11.01.1990 FR 9000287
(43) Date de publication de la demande: 17.07.1991
(73) Titulaire: GAZ DE FRANCE (SERVICE NATIONAL), F-75017 Paris (FR); SOCIETE JOSEPH SAURON MATERIEL INDUSTRIEL, F-91200 Athis Mons (FR)
(72) Inventeur: Moreau, Christian, F-78500 Sartrouville (FR); Sauron, Jean, F-91210 Draveil (FR)
(74) Mandataire: Lerner, François

(56) Documents cités:
- EP-A- 0 082 451
- EP-A- 0 299 833
- WO-A-85/01367
- CH-A- 668 741

## Description

L'invention a pour objet de proposer un nouveau type d'alimentation en énergie électrique d'une résistance électrique de chauffage avec un signal traité permettant en particulier d'améliorer les conditions de chauffage par Effet Joule de la résistance et de diminuer très largement le poids des appareils équipés d'un circuit d'alimentation correspondant, du type générateur.

L'invention trouve son application dans le domaine gazier et de la distribution de l'eau ou de l'écoulement des eaux usés, pour l'alimentation en énergie électrique d'accessoires généralement désignés sous le vocable "électrosoudables", principalement destinés à la construction ou à la réparation des réseaux de canalisations en matière plastique, telle que du polyéthylène haute densité (densité comprise habituellement entre 920 et 950 kg/m³) ou encore par exemple du polypropylène . Toujours dans le même domaine, l'invention pourra être utilisée pour l'alimentation d'accessoires électrochauffants, notamment thermorétractables, pour la réparation de canalisations en fonte ou en acier, ou encore pour assurer leur assemblage hétérogène (matières différentes).

On pourrait même envisager d'appliquer l'invention dans le domaine de l'électricité industrielle en particulier pour l'alimentation d'accessoires thermomoulables de protection, réhabilitation ou maintenance de câbles électriques ou de réseaux de télécommunications.

Bien entendu, il existe déjà sur le marché différents systèmes pour alimenter une résistance de chauffage avec l'énergie électrique voulue.

Des systèmes connus fonctionnent pour déliver, à partir d'une source de courant alternatif 110 ou 220 volts, une tension en général abaissée dans une gamme allant d'environ de 12 à 48 - 50 volts, par l'intermédiaire d'un transformateur à induction électromagnétique, voire d'un auto-transformateur.

De tels systèmes d'alimentation devant pouvoir être utilisés sur le terrain, les sources de courant alternatif sont habituellement constituées autour d'une génératrice de chantier ou d'un groupe électrogène dit "portable",bien que lourd et encombrant,pouvant délivrer de l'ordre de 2 à 4 kwatts avec un poids généralement de l'ordre de 20 à 25 kg.

Ces systèmes connus présentent comme autre inconvénient de réinjecter des harmoniques de courant sur le réseau servant à l'alimentation de la résistance. Et les perturbations qui apparaissent également en harmoniques de tension peuvent même conduire à des déclassements importants du générateur entre la puissance nominale et la puissance effectivement utilisable.

Parmi les systèmes connus, on peut en particulier citer celui de la demande EP-A-0299833 qui décrit un procédé et une machine pour la soudure automatique de pièces en matière plastique, comportant un bobinage intégré et des moyens de régulation pour faire varier l'énergie électrique délivrée au bobinage et contrôler ainsi la température de ce bobinage pendant la phase de soudage.

La résistance, chauffée par le circuit et contenue dans une enveloppe en matière plastique, est alimentée avec un courant unidirectionnel pouvant être obtenu de manière classique à partir d'une source de courant alternatif. Outre qu'il ne résout pas spécifiquement les inconvénients de la technique déjà évoqués, ce système ne comporte pas toutefois tous les moyens pour maîtriser la puissance ou énergie de chauffage fournie à la résistance.

L'invention a donc pour objet de résoudre ces difficultés en proposant une solution permettant de diminuer sensiblement l'écart entre la puissance nominale et la puissance utilisable, de réduire la réinjection d'harmoniques dans une très grande proportion, de limiter sensiblement le poids du système d'alimentation dans son ensemble et d'assurer une maîtrise de la puissance de chauffage de la résistance électrique.

A cet effet, l'invention propose tout d'abord un procédé destiné donc à traiter un signal électrique d'alimentation d'une résistance de chauffage, à partir d'une source de courant alternatif, ce procédé comprenant les étapes:
- de redressement du courant délivré par ladite source pour obtenir un signal unidirectionnel,
- de traitement de ce signal pour délivrer un signal traité comportant deux composantes superposées de courant à tension variable, l'une continue, l'autre alternative haute fréquence (H.F.),
- de contrôle dudit courant traité pour régler la tension fournie aux bornes de la résistance de chauffage en fonction de la puissance de chauffage à délivrer à ladite résistance, et
- d'alimentation de la résistance de chauffage avec ledit signal traité.

En complément de ce procédé, l'invention se rapporte également au circuit d'alimentation en tant que tel prévu pour alimenter en énergie électrique la résistance de chauffage considérée. Ce circuit, comprend, selon l'invention :
- une source de courant alternatif,
- un redresseur de courant propre à délivrer un signal unidirectionnel,
- et un hâcheur propre à délivrer aux bornes de ladite résistance un courant traité à deux composantes superposées l'une continue, l'autre alternative haute fréquence (H.F.), avantageusement toutes deux à tension variable, ce hâcheur comprenant des moyens de contrôle du courant traité pour régler la tension fournie aux bornes de cette résistance en fonction de la puissance de chauffage à lui délivrer.

Et l'invention concerne encore l'utilisation de ce circuit pour alimenter avec un tel signal traité la résistance électrique d'une pièce de raccordement ou de réparation utilisée sur des canalisations de gaz ou d'eau, l'application principale de l'invention restant toutefois "l'électrosoudage" où l'on a pu constater d'ores et déjà les effets bénéfiques de l'invention.

D'autres caractéristiques et avantages de l'invention apparaîtront encore de la description qui va suivre faite en référence aux desssins annexés donnés uniquement à titre d'exemple et dans lesquels :
- la figure 1 est un schéma synoptique d'un type de circuit électrique conforme à l'invention permettant d'alimenter une résistance de chauffage avec un signal découpé à composante de relativement haute fréquence,
- la figure 2 est un schéma illustrant l'application de l'invention à la liaison par soudage de tubes en matière thermoplastique, par l'intermédiaire d'une pièce de raccordement électrosoudable,
- la figure 3 représente de façon schématique encore une autre application de l'invention utilisée pour l'isolation de tubes métalliques au moyen d'une enveloppe d'enrobage électrochauffante à matière thermorétractable,
- les figures 4a et 4b illustrent toujours de façon schématique, encore une autre application de l'invention à la réparation de deux canalisations métalliques à extrémités d'aboutement mâle-femelle, via une enveloppe électrochauffante thermorétractable,
- et la figure 5 montre encore de façon schématique une application supplémentaire de l'invention dans le cadre d'une intervention sur un câble à fils métalliques servant au transport d'énergie électrique ou aux télécommunications.

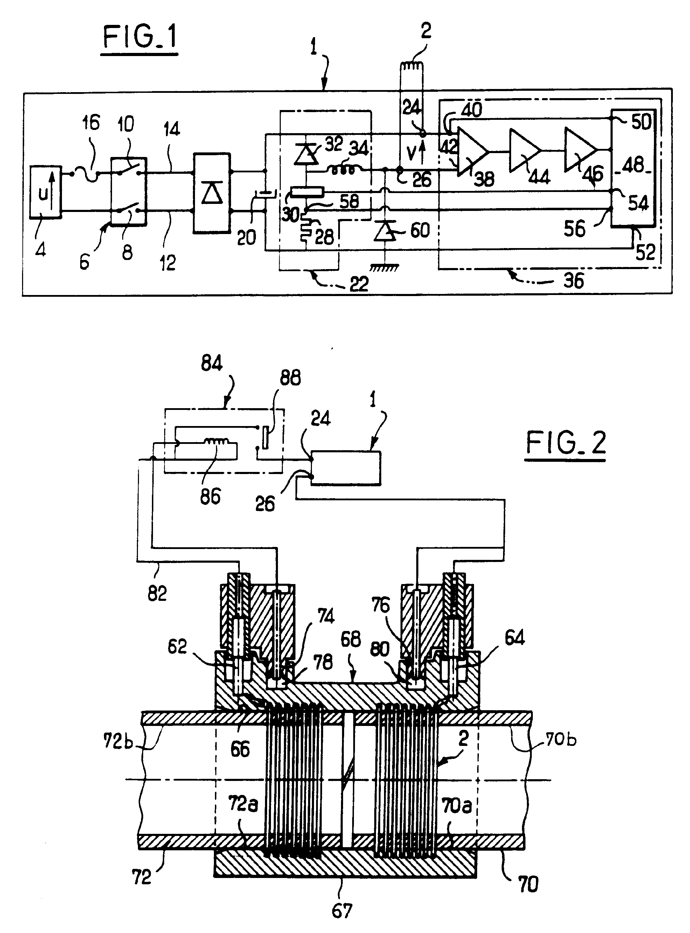

Si l'on se reporte tout d'abord à la figure 1, on voit donc illustré le circuit type prévu dans l'invention pour assurer un découpage en fréquence d'une tension à partir d'un signal redressé provenant d'une source de courant alternatif, de façon à délivrer vers une résistance électrique 2 de chauffage un signal traité comportant deux composantes superposées de courant, l'une continue, l'autre alternative H.F.

Plus précisément, le circuit représenté comprend tout d'abord une source de courant alternatif 4 pouvant être constituée par une génératrice de chantier susceptible de délivrer une tension de l'ordre par exemple de 200 à 240 volts avec une fréquence possible de 50 à 60 hertz.

Par sécurité, un contacteur avec protection différentielle 6 protège le circuit via deux interrupteurs 8, 10 prévus respectivement sur la ligne de masse 12 et sur la ligne d'alimentation 14, avec interposition sur cette dernière d'un fusible 16.

En 18, a été représenté un redresseur de courant propre à délivrer à partir du courant alternatif qu'il reçoit un signal unidirectionnel en direction d'un élément de filtrage tel qu'un condensateur 20 monté entre les lignes de sortie d'alimentation et de masse du redresseur 18.

En tant qu'élément de redressement, on peut par exemple utilisé un pont monophasé.

En sortie de la capacité de filtrage 20, le signal unidirectionnel redressé est traité par un convertisseur statique de type hâcheur 22 susceptible donc de délivrer en sortie, aux bornes 24 et 26 de la résistance électrique 2, un courant à deux composantes associées l'une continue, l'autre alternative H.F., toutes deux à tension variable V normalement inférieure ou égale à la tension U aux bornes de la source 4 de courant alternatif.

En règle générale, la tension v pourra évoluer entre 10 et 110 volts, et sera en règle générale comprise, notamment dans le cadre d'une application au domaine gazier, entre 10 et 50 volts environ.

Comme cela est clairement illustré sur la figure 1, le hâcheur 22 comprend tout d'abord, branchée en série entre la ligne d'alimentation en courant redressé et la ligne de masse du circuit, une résistance 28 de "shunt" (ou de dérivation) pour la mesure du courant débité, dont l'une des bornes est reliée à la ligne de masse et dont l'autre borne est reliée à un élément de commutation 30 formant régulateur de tension à conduction unidirectionnelle, lui-même relié par l'une de ses bornes à l'anode d'une diode 32 "roue libre" dont la cathode est reliée à la ligne d'alimentation en courant redressé. A l'anode de la diode 32 est encore branchée une self-induction 34 connectée par son autre borne à la borne 26 de la résistance 2, cette self-induction permettant d'agir sur l'amplitude du courant régulé en fonction de la fréquence de commutation du régulateur 30.

Le régulateur 30 qui peut être constitué par un transistor tel qu'un "Darlington de puissance" est, pour son fonctionnement, placé sous le contrôle de moyens de commande formant l'étage de régulation analogique 36.

Ces moyens de commande comprennent tout d'abord un amplificateur différentiel 38 dont les entrées 40, 42 sont branchées sur la sortie du hâcheur, c'est-à-dire aux bornes 24 et 26.

En sortie de l'amplificateur différentiel 38, le signal correspondant passe ensuite dans un convertisseur de valeur efficace 44 puis dans un amplificateur PID (proportionnel/intégral/différentiel) 46 pour être ensuite reçu dans un convertisseur analogique/numérique 48 constituant le circuit de contrôle du transistor 30, c'est-à-dire de sa fréquence de commutation, de l'intensité débitée, de sa tension d'alimentation et de son fonctionnement en marche/arrêt.

Le bloc de commande 36 ainsi constitué étant d'une structure classique, il ne sera pas décrit plus avant.

On notera simplement encore que l'unité de contôle 48 est bien entendu connectée en 50 et 52 respectivement aux lignes d'alimentation et de masse du circuit et que ses bornes complémentaires 54 et 56 sont respectivement reliées au transistor 30 et à un point 58 de branchement sur la liaison entre la résistance 28 et le transistor 30.

On notera encore que par sécurité il a été prévu une diode de protection 60 branchée par son anode à la ligne de masse et par sa cathode à la ligne de liaison entre la self-induction 34 et la borne 26 de branchement de la résistance de chauffage 2 que le présent circuit doit alimenter.

De la description structurelle qui vient d'être faite du circuit, il apparaît clairement qu'il va être possible, conformément à l'invention, de réguler la tension de sortie fournie aux bornes de la résistance 2 avec un découpage en fréquence élevée de la tension (prévu a priori entre 1 et 100 KHz environ) et superposition du signal traité par le hâcheur 22 en deux composantes respectivement continue et alternative H.F., modulables ou réglables via la self-induction.

Par la maîtrise possible de la composante alternative H.F. de ce courant, et dans le cas où la résistance 2 consistera en un fil ou en un câble électriquement conducteur, on va ainsi pouvoir concentrer à la périphérie du fil l'énergie ou la puissance de chauffage délivrée à la résistance, améliorant ou du moins modifiant ainsi favorablement les caractéristiques de fusion du matériau au sein duquel sera habituellement disposée cette résistance, compte tenu des domaines d'application privilégiés de l'invention que l'on va maintenant rapidement présenter.

Avant cela, on notera malgré tout encore trois avantages inhérents à l'invention, à savoir :
- l'accroissement possible, par rapport aux générateurs d'alimentation classiques, de l'amplitude du signal ondulatoire utilisé comme composante du signal délivré à la résistance 2,
- la diminution de la réinjection des harmoniques de courant sur le réseau d'alimentation de la résistance,
- et la possibilité de proposer des générateurs d'un poids nettement réduit, de l'ordre de 4 à 5 kilos pour une puissance de l'ordre de 3 à 5 kW et une tension délivrée en sortie de l'ordre de 50 volts.

Intéressons-nous donc maintenant à la figure 2 pour voir illustré un premier exemple d'application privilégiée de l'invention, à savoir l'alimentation d'un accessoire électrosoudable destiné à la réalisation ou à la réparation de canalisations en matière plastique (et plus particulièrement en matière thermoplastique) utilisées pour la distribution du gaz naturel.

Sur cette figure 2, on a schématisé, toujours sous le repère 1, l'ensemble du circuit électrique de l'invention illustré sur la figure 1.

En l'espèce, les deux bornes 24 et 26 du circuit 1 sont reliées à deux cosses de liaison 62 et 64 pour la connexion de la résistance 2, qui peut se présenter en l'espèce sous la forme d'un fil électrique bobiné disposé à proximité immédiate de la surface intérieure de liaison 66 de la pièce de raccordement de l'accessoire électrosoudable 68, lequel peut consister en un manchon dont l'orifice intérieur reçoit relativement étroitement deux tubes 70 et 72 insérés bout à bout à l'intérieur du manchon de façon à présenter chacun une surface de jonction 70a, 72a sensiblement contiguë à la surface en regard de liaison 66 de l'orifice du manchon.

Parmi les matières plastiques utilisables pour réaliser les tubes à réunir et le corps de l'accessoire 68, on peut notamment citer le polyéthylène, le polyamide, le polybutylène et le polypropylène.

L'opération de soudage s'opère par circulation du courant dans la résistance, ce courant échauffant cette dernière par effet joule et provoquant ainsi le ramollissement jusqu'a fusion sous pression de la matière plastique environnante des pièces dont le chauffage jusqu'a la température prédéterminée de soudage est limité à l'endroit de la zone de soudage entourant la résistance, les parties "extérieures" enveloppantes des pièces 67, 70b, 72b, éloignées de la résistance, étant maintenues à une température inférieure et n'étant ainsi pas fondues.

Pour le contrôle de ce soudage, on remarquera encore sur la figure 1 que l'accessoire 68 a été équipé de deux capteurs 74 et 76 dont une extrémité plonge dans une cavité, respectivement 78 et 80, s'étendant radialement à partir de la surface extérieure du manchon jusqu'au voisinage de la partie de la résistance en regard la plus voisine.

Au cours du chauffage, la matière plastique environnante amenée à son état fondu va pouvoir, sous l'effet de la pression, ainsi pénétrer dans les cavités et agir sur les capteurs 74 et 76, lesquels pourront par exemple consister en des micro-interrupteurs ou en des capteurs optiques susceptibles de détecter des variations dans l'état physique de la matière au sein des cavités, de façon à provoquer l'arrêt du chauffage par interruption de l'énergie électrique délivrée à la résistance 2, dès que la température prédéterminée de soudage aura été atteinte (température comprise en pratique entre la température de fusion de la matière plastique et la température de dégradation thermique de ces mêmes pièces).

A cet effet, il a été en outre prévu, sur le conducteur 82 qui alimente la borne 62 de la résistance, d'interposer un boîtier de commande tel que 84 comportant un relais 86 à enclenchement manuel via le bouton-poussoir 88 et dont le déclenchement est commandé automatiquement par les capteurs 74 ou 76.

Bien entendu, d'autres moyens de contrôle du temps pendant lequel la résistance électrique est alimentée en énergie auraient pu être prévus.

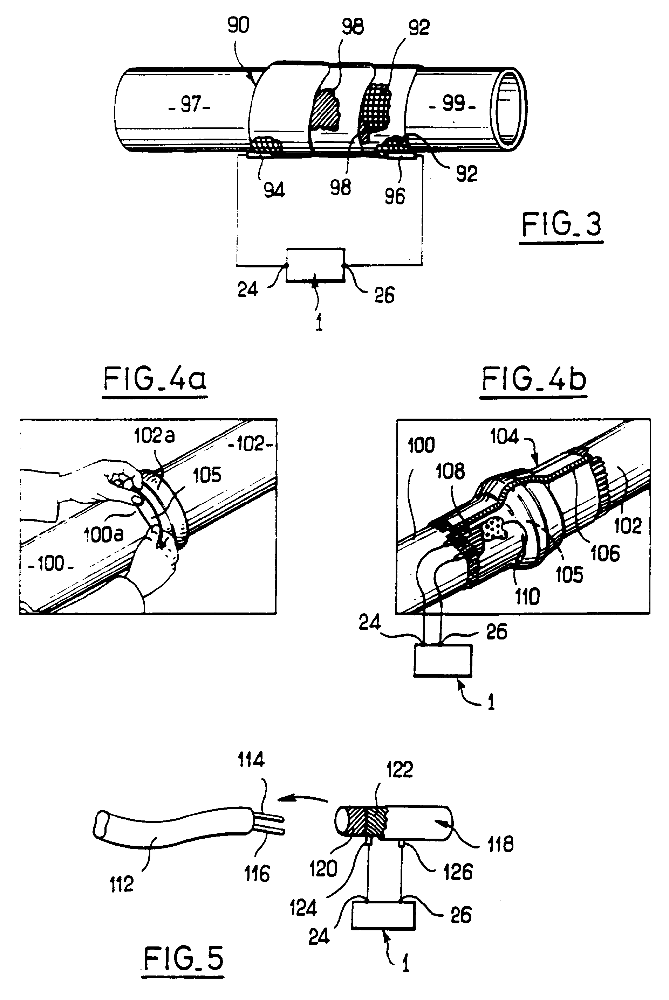

Sur la figure 3, a été illustré le cas de l'application du circuit de l'invention à l'alimentation d'un accessoire électrochauffant 90 prévu pour l'enrobage de canalisations métalliques, par exemple en acier, largement utilisées pour la distribution de gaz naturel (sous pression) ou d'eau.

Sur cette figure 3, l'accessoire connu électrochauffant 90 se présente sous la forme d'une bande enroulée, thermorétractable qui enrobe à l'endroit de leur liaison par soudure deux canalisations 97 et 99 mises bout à bout, et qui comprend, dans son épaisseur, une résistance électrique de chauffage schématisée en 92 et équipée de ses deux bornes de connexion 94 et 96 reliées bien entendu aux deux bornes de sortie 24 et 26 du circuit de l'invention (toujours repéré dans son ensemble 1), de façon que le courant délivré par cette source chauffe comme précédemment par effet joule la résistance 92 jusqu'à rétractation de la bande 90, assurant ainsi l'isolation de la partie extrême des canalisations 97 et 99 qu'elle recouvre. Sur la figure 3, comme d'ailleurs sur les figures 4a, 4b et 5 qui vont suivre, on notera que l'on ne s'est pas intéressé à la partie relative au bloc de contrôle du temps de chauffage de la résistance, laquelle ne fait l'objet de l'invention.

On notera par contre qu'en l'espèce la bande 90 qui forme donc une sorte de gaine protectrice pour l'isolation thermique des canalisations (avec adjonction possible d'une enveloppe d'enrobage en mousse isolante) comprend une couche extérieure thermorétractable, maillée, plaquée ou laminée sur une couche intérieure de liaison 98 en matière plastique compatible, telle que du polyéthylène, qui après enrobage du tube, va donc relier de façon étanche au gaz le joint d'enveloppe du tube, ce tube et la bande en elle-même pour consolider ses différentes couches.

La troisième application privilégiée de l'invention qui a été schématisée sur les figures 4a et 4b, concerne la réparation de deux canalisations 100 et 102 métalliques aboutées de distribution de gaz sous pression, emboîtées axialement l'une dans l'autre par leurs extrémités, respectivement mâle 102a et femelle 100a, et dont la liaison doit être maintenue étanche au gaz, via une enveloppe électrochauffante thermorétractable 104 (figure 4b) en soi connue.

Comme on peut le constater sur la figure 4a, avant de placer l'enveloppe, il est conseillé de venir limiter les fuites de gaz à l'endroit de l'emboîtement des tubes à l'aide d'un joint de mastic 105. Ensuite, autour de ce premier joint on vient disposer un autre joint souple d'étanchéité en matière fusible thermorétractable (non représenté) que l'on va recouvrir par l'enveloppe électrochauffante 104 fermée par sa glissière 106. Pour assurer sa fonction, l'enveloppe 104 comprend une résistance électrique de chauffage à fil(s) électrique(s) en forme de serpentin figuré(s) en 108, et une matière d'adhésion thermofusible repérée en 110.

Comme précédemment, pour permettre la rétractation de la gaine, les bornes de connexion de la résistance 108 seront reliées aux deux sorties 24 et 26 du circuit de l'invention toujours schématisé en 1. Avant de faire circuler le courant pour opérer le rétreint de l'enveloppe, il est conseillé d'entourer cette dernière d'une couverture amovible d'isolation thermique et électrique, prévue à cet effet (non représentée).

En relation avec les deux applications précédentes, on peut également citer l'utilisation tout à fait appropriée de l'invention dans le cadre de la jonction ou de la réparation de canalisations en matières différentes, c'est-à-dire métallique (fonte, acier...) et matière plastique (notamment thermoplastique : polyéthylène, polypropylène...).

Comme dans les deux cas précédents, on recourra à une gaine ou à un manchon électrochauffant connu thermorétractable (non représenté) correctement positionné autour du joint des canalisations à réunir ou à réparer, le manchon étant composé de plusieurs couches en matériau(x) thermorétractable(s) renforcées de fibres de verre et enduites d'un adhésif compatible. Bien entendu, le manchon sera équipé d'un fil de chauffage incorporé, flexible, opérant à la tension voulue, de façon à obtenir une liaison par réticulation et par irradiation ; l'adhésif assurant une étanchéité de longue durée et le renforcement par fibres de verre apportant la résistance mécanique requise.

Reportons-nous maintenant à la figure 5 pour voir illustrée une autre application particulière de l'invention à l'alimentation électrique d'un accessoire thermomoulable de protection, réhabilitation ou maintenance d'un câble à corps en matière plastique enrobant des fil(s) métallique(s) servant au transport d'énergie électrique ou aux télécommunications.

Dans le cadre de cette application, et comme cela apparaît clairement au vu de la figure 5, on va venir recouvrir l'extrémité dénudée d'un câble 112 à fils conducteurs 114 et 116 au moyen d'une gaine ou d'un fourreau électrochauffant 118 prémoulé à structure connue multicouche laminée comportant une partie thermorétractable 120 à couche en matière adhésive thermofusible et équipée d'une résistance de chauffage 122 pouvant être constituée par une couche de matière polymère électriquement conductrice.

Bien entendu, pour obtenir le rétreint du fourreau après avoir placé celui-ci autour de l'extrémité dénudée des fils avec recouvrement partiel de l'enveloppe isolante du câble 112, les deux bornes de connexion 124 et 126 de la résistance 122 seront reliées aux deux cosses de branchement 24 et 26 du circuit d'alimentation de l'invention, toujours schématisé par le bloc 1, de façon à porter, par effet joule, la résistance à une température suffisante pour induire une réticulation par irradiation avec rétreint du fourreau, assurant ainsi sa liaison étanche au gaz avec le câble 112, tout en permettant de réserver autour des fils dénudés une zone formant une chambre intérieure éventuellement pressurisable.

On notera que tous types de câbles polyéthylène ou plomb, câbles coaxiaux, à paires ou fibres optiques, sont concernés par cette application.

## Revendications

1. Procédé pour alimenter en courant électrique, à partir d'une source de courant alternatif (4), une résistance électrique disposée dans une enveloppe (68, 90, 104) en matière plastique devant être chauffée par ladite résistance, comprenant les étapes :
- de redressement du courant délivré par ladite source pour obtenir un courant unidirectionnel,
- de traitement de ce courant unidirectionnel pour délivrer un courant traité comportant deux composantes superposées de courant, l'une continue, l'autre alternative haute fréquence,
- de contrôle dudit courant traité pour régler la tension fournie aux bornes de la résistance de chauffage (12, 92, 108, 122) en fonction de la puissance de chauffage à délivrer à ladite résitance, et
- d'alimentation de la résistance de chauffage (2, 92, 108, 122) avec ledit courant traité.

2. Circuit d'alimentation pour chauffer par effet Joule une enveloppe (68, 94, 104) en matière plastique comprenant :
- une résistance électrique (2, 92, 108, 122) de chauffage disposée dans ladite enveloppe,
- une source (4) de courant alternatif,
- un redresseur (18) de courant relié à ladite source et délivrant un courant unidirectionnel,
- et un hâcheur (22) relié audit redresseur et délivrant aux bornes de ladite résistance (2, 92, 108, 122) un courant traité à deux composantes superposées l'une continue, l'autre alternative haute fréquence, ce hâcheur comprenant des moyens de contrôle (30, 34) du courant traité pour régler la tension fournie aux bornes de ladite résistance en fonction de la puissance de chauffage à lui délivrer.

3. Circuit selon la revendication 2 caractérisé en ce que la résistance électrique est un fil ou un cable électriquement conducteur et les moyens de contrôle du courant traité agissent sur la composante alternative haute fréquence pour concentrer à la périphérie de ladite résistance la puissance de chauffage à lui délivrer.

4. Circuit selon la revendication 2 ou 3 caractérisé en ce que le hâcheur comprend :
- un élément de commutation (30) formant régulateur de tension à conduction unidirectionnelle,
- une résistance (28) ayant une première borne reliée à une ligne de masse (12) du circuit et une seconde borne reliée à une première borne dudit élément de commutation (30),
- une diode (32) dont la cathode est reliée à ladite résistance de chauffage (2) à travers une ligne d'alimentation (14) dudit circuit et dont l'anode est reliée à une seconde borne de l'élément de commutation (30),
- une self-induction (34) ayant une première borne branchée entre ladite seconde borne de l'élément de commutation (30) et l'anode de la diode (32), pour modifier l'amplitude du courant délivré à ladite résistance de chauffage en fonction de la fréquence de commutation de l'élément de commutation,

5. Circuit selon la revendication 4 caractérisé en ce que l'élément de commutation (30) est un transistor.

6. Circuit selon l'une quelconque des revendications 2 à 5 caractérisé en ce qu'un condensateur (20) interposé entre le redresseur (18) et le hâcheur (22) est branché entre la ligne d'alimentation (14) et la ligne de masse (12).

7. Circuit selon l'une quelconque des revendications 2 à 6 caractérisé en ce que la tension délivrée par le hâcheur (22) est comprise entre 10 et 110 volts environ, et de préférence 10 et 50 volts, la fréquence de la composante alternative dudit signal traité étant comprise entre environ 1 et 100 KHz.

8. Utilisation du circuit selon l'une quelconque des revendications 2 à 7 pour alimenter avec ledit signal traité la résistance électrique (2) dont est munie une pièce de raccordement électrosoudable (68), formant enveloppe, à proximité d'une surface de jonction (66) pour sa liaison par soudage avec des surfaces contiguës (70a, 72a) d'éléments tubulaires (70, 72) en matière thermoplastique compatible avec la matière de la pièce de raccordement.

9. Utilisation du circuit selon l'une quelconque des revendications 2 à 7 pour alimenter avec ledit signal traité la résistance électrique (92, 108) dont est munie dans son épaisseur une gaine formant enveloppe protectrice électrochauffante multicouche comprenant un corps en matière thermorétractable (90, 104) et une couche intérieure de liaison (98, 110) propre à enrober de façon sensiblement étanche aux gaz au moins une canalisation (97, 100, 102).

10. Utilisation du circuit selon l'une quelconque des revendications 2 à 7 pour alimenter avec ledit signal traité la résistance électrique (122) dont est muni dans son épaisseur un fourreau (118) formant enveloppe à structure multicouche comprenant une partie thermorétractable (120) à couche en matière thermofusible propre à adhérer sur un câble (112) à corps en matière plastique d'enrobage de fils métalliques (114, 116) servant au transport d'énergie électrique ou aux télécommunications.

## Patentansprüche

1. Verfahren zum Liefern von elektrischem Strom, ausgehend von einer Wechselstromquelle (4), für einen elektrischen Widerstand, der in einer Kunststoflhülle (68, 90, 104) angeordnet ist, bevor diese durch den Widerstand erhitzt wird, mit den Schritten:
- des Gleichrichtens des durch die Quelle gelieferten Stromes, um einen einseitig gerichteten Strom zu erhalten,
- der Behandlung dieses einseitig gerichteten Stromes, um einen behandelten Strom zu liefern, der zwei übereinanderliegende Stromkomponenten aufweist, eine Gleichstrom- und eine andere Wechselstromhochfrequenzkomponente,
- der Steuerung des behandelten Stromes, um die an die Klemmen des Heizwiderstandes (12, 92, 108, 122) gelieferte Spannung in Funktion der dem Widerstand zu liefernden Heizleistung zu regulieren, und
- der Versorgung des Heizwiderstandes (2, 92, 108, 122) mit dem behandelten Strom.

2. Versorgungsschaltung, um durch Joule-Effekt eine Kunststofffhülle (68, 94, 104) zu erhitzen, welche aufweist:
- einen elektrischen Heizwiderstand (2, 92, 108, 122), der in der Hülle angeordnet ist,
- eine Wechselstromquelle (4),
- einen Stromgleichrichter (18), der mit der Quelle verbunden ist und der einen einseitig gerichteten Strom liefert,
- und einen Zerhadker (22), der mit dem Gleichrichter verbunden ist und an die Klemmen des Widerstandes (2, 92, 108, 122) einen behandelten Strom mit zwei übereinanderliegenden Komponenten liefert, einer Gleichstrom- und einer Wechselstromhochfrequenzkomponente, wobei der Zerhacker Steuerungsmittel (30, 34) für den behandelten Strom aufweist, um die an die Klemmen des Widerstandes gelieferte Spannung in Funktion der an ihn zu liefemden Heizieistung zu regeln.

3. Schaltung nach Anspruch 2, dadurch gekennzeichnet, daß der elektrische Widerstand ein elektrisch leitender Draht oder Kabel ist und daß die Steuermittel für den behandelten Strom auf die Wechselstromhochfrequenzkomponente einwirken, um an dem Umfang des Widerstandes die an ihn zu liefernde Heizleistung zu konzentrieren.

4. Schaltung nach Anspruch 2 oder 3, dadurch gekennzeichnet, daß der Zerhacker aufweist:
- ein Schaltglied (30), welches einen Spannungsregler mit einseitig gerichteter Leitung bildet,
- einen Widerstand (28), der eine erste Klemme hat, die mit einer Masseleitung (12) der Schaltung verbunden ist, und eine zweite Klemme hat, die mit einer ersten Klemme des Schaltgiledes (30) verbunden ist,
- eine Diode (32), deren Kathode mit dem Heizwiderstand (2) über eine Versorgungsleitung (14) der Schaltung verbunden ist und deren Anode mit einer zweiten Klemme des Schaltgliedes (30) verbunden ist,
- eine Selbstinduktion (34) mit einer ersten Klemme, die zwischen der zweiten Klemme des Schaltgliedes (30) und der Anode der Diode (32) angeschlossen ist, um die Amplitude des dem Heizwiderstand gelieferten Stromes in Funktion der Schalthäufigkeit des Schaltgliedes zu verändern.

5. Schaltung nach Anspruch 4, dadurch gekennzeichnet, daß das Schaltglied (30) ein Transistor ist.

6. Schaltung nach einem der Ansprüche 2 bis 5, dadurch gekennzeichnet, daß der zwischen dem Gleichrichter (18) und dem Zerhacker (22) angeordnete Kondensator (20) zwischen der Versorgungsleitung (14) und der Masseleitung (12) angeschlossen ist.

7. Schaltung nach einem der Ansprüche 2 bis 6, dadurch gekennzeichnet, daß die durch den Zerhacker (22) gelieferte Spannung ungefähr zwischen 10 und 110 Volt beträgt und vorzugsweise zwischen 10 und 50 Volt, wobei die Frequenz der Wechselstromkomponente des behandelten Signales zwischen ungefähr 1 und 100 KHz liegt.

8. Benutzung einer Schaltung nach einem der Ansprüche 2 bis 7, um mit dem behandelten Signal den elektrischen Widerstand (2) zu versorgen, mit welchem ein elektrisch schweißbares Verbindungsstück (68), welches die Hülle bildet, in der Nähe einer Verbindungsoberfläche (66) ausgestattet ist, für seine Verbindung durch Schweißen mit angrenzenden Oberflächen (70a, 72a) der rohrförmigen Elemente (70, 72) aus Kunststoff, der mit dem Material des Verbindungsstückes verträglich ist.

9. Benutzung der Schaltung nach einem der Ansprüche 2 bis 7, um mit dem behandelten Signal den elektrischen Widerstand (92, 108) zu versorgen, mit welchem eine Ummantelung in ihrer Dicke ausgestattet ist, welche eine elektroheizende vielschichtige Schutzhülle bildet, die einen Körper aus wärmezurückziehbarem Material (90, 104) und eine innere Verbindungsschicht (98, 110) aufweist, die geeignet ist, in für Gase im wesentlichen dichter Weise mindestens eine Rohrleitung (97, 100, 102) zu ummanteln.

10. Benutzung der Schaltung nach einem der Ansprüche 2 bis 7, um mit dem behandelten Signal den elektrischen Widerstand (122) zu versorgen, mit dem in ihrer Dicke eine Hülse (118) ausgestattet ist, die eine Hülle mit vielschichtigem Aufbau bildet, welche einen wärmezurückziehbaren Teil (120) mit einer Schicht aus wärmeschmelzbarem Material aufweist, das geeignet ist, auf einem Kabel (112) mit Kunststoffkörper aus Ummantelung von Metalldrähten (114, 116) zu haften, welche dem Transport der elektrischen Energie oder der Telekommunikation dienen.

## Claims

1. Process for supplying an electric current from an alternating current source (4) to an electrical resistor disposed in a cover (68, 90, 104) of plastics material which is to be heated by said resistor, comprising the following steps:
- rectification of the current delivered by said source to obtain a unidirectional current;
- processing of the unidirectional current to deliver a processed current comprising two superimposed current components, one which is direct and the other which is alternating and high-frequency;
- controlling said processed current to regulate the voltage supplied to the terminals of the heating resistor (12, 92, 108, 122) as a function of the heating output of said resistor; and
- supplying the processed current to the heating resistor (2, 92, 108, 122).

2. Supply circuit for heating a cover (68, 94, 104) of plastics material by the Joule effect, comprising:
- an electrical heating resistor (2, 92, 108, 122) disposed in said cover:
- an alternating current source (4);
- a current rectifier (18) which is connected to said source and which delivers a unidirectional current; and
- a chopper (22) which is connected to said rectifier and which supplies a processed current having two superimposed components, one which is direct and the other which is alternating and high-frequency, to the terminals of said resistor (2, 92, 108, 122), this chopper comprising means (30, 34) for controlling the processed current to regulate the voltage supplied to the terminals of said resistor as a function of the heating output to be delivered thereto.

3. Circuit according to Claim 2, characterised in that the electric resistor is an electrically conductive wire or cable and the means of controlling the processed current act on the alternating high-frequency component to concentrate the heating output to be delivered to the resistor at the periphery thereof.

4. Circuit according to Claim 2 or 3, characterised in that the chopper comprises:
- a commutating element (30) forming a voltage regulator with unidirectional conduction;
- a resistor (28) having a primary terminal connected to an earth line (12) of the circuit and a second terminal connected to a first terminal of said commutating element (30); a diode (32) of which the cathode is connected to said heating resistor (2) via a feed line (14) of said circuit and of which the anode is connected to a second terminal of the commutating element (30);
- a self-induction (34) having a first terminal connected between said second terminal of the commutating element (30) and the anode of the diode (32) to modify the amplitude of the current supplied to said heating resistor as a function of the commutating frequency of the commutating element.

5. Circuit according to Claim 4, characterised in that the commutating element (30) is a transistor.

6. Circuit according to any one of Claims 2 to 5, characterised in that a capacitor (20) interposed between the rectifier (18) and the chopper (22) is connected between the supply line (14) and the earth line (12).

7. Circuit according to any one of Claims 2 to 6, characterised in that the voltage supplied by the chopper (22) is between approximately 10 and 110 volts, and preferably between 10 and 50 volts, the frequency of the alternating component of said processed signal being between approximately 1 and 100 KHz.

8. Use of the circuit according to any one of Claims 2 to 7, to supply said processed signal to the electric resistor (2) with which an electrically weldable connection part (68) forming a cover, is provided in the vicinity of a joining surface (66) for its connection to by welding to the contiguous surfaces (70a, 72a) of tubular elements (70, 72) of thermoplastics material which is compatible with the material of the connection part.

9. Use of the circuit according to any one of Claims 2 to 7, to supply said treated signal to the electrical resistor (92, 108) with which is provided throughout its thickness a sleeve forming a multi-layered electrically heated protective cover comprising a body of heat-shrinkable material (90, 104) and an inner connecting layer (98, 110) suitable for encasing at least one channel (97, 100, 102) in a manner substantially leaktight with respect to gas.

10. Use of the circuit according to any one of Claims 2 to 7, to supply said processed signal to the electrical resistor (122) with which is provided, throughout its thickness, a sleeve (118) forming a cover with a multi-layered structure comprising a layered heat-shrinkable part (120) of a thermofusible material suitable for adhering to a cable (112) with a body of plastics material for encasing metal wires (114, 116) used for transmission of electrical energy or for telecommunications.
